(19) Europäisches Patentamt / European Patent Office / Office européen des brevets

(11) **EP 4 712 103 A1**

(12) **DEMANDE DE BREVET EUROPEEN**

(43) Date de publication:
**18.03.2026 Bulletin 2026/12**

(21) Numéro de dépôt: **24306496.1**

(22) Date de dépôt: **12.09.2024**

(51) Classification Internationale des Brevets (IPC):
**G21C 3/54** *(2006.01)* **G21C 19/48** *(2006.01)*
**G21C 19/50** *(2006.01)* **G21F 9/06** *(2006.01)*

(52) Classification Coopérative des Brevets (CPC):
**G21C 3/54; G21C 19/48; G21C 19/50; G21F 9/06**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(71) Demandeur: **Naarea**
**92000 Nanterre (FR)**

(72) Inventeurs:
• **DELPECH, Sylvie**
  **91300 MASSY (FR)**
• **LAMBERTIN, David**
  **92000 Nanterre (FR)**

(74) Mandataire: **Santarelli**
**Tour Trinity**
**1 bis Place de la Défense**
**92400 Courbevoie (FR)**

(54) **PROCÉDÉ POUR CONTRÔLER LA COMPOSITION EN ACTINIDES D'UN BAIN DE SELS FONDUS CHLORURES**

(57) La présente invention concerne un procédé pour obtenir un bain de sels fondus chlorures comprenant au moins un actinide dans lequel l'état et/ou le degré d'oxydation dudit au moins un actinide sont prédéterminés, comprenant les étapes suivantes : (a) établir, pour ledit au moins un actinide, son diagramme potentiel-oxoacidité à une température T donnée dans un bain de sels fondus chlorures, (b) à partir du diagramme potentiel-oxoacidité établi à l'étape (a), définir le domaine de potentiel-oxoacidité dans lequel ledit au moins un actinide se trouve dans l'état et/ou le degré d'oxydation prédéterminés, (c) sélectionner au moins trois composés différents permettant de fixer, à la température T, le potentiel et l'oxoacidité du bain de sels fondus chlorures dans le domaine défini à l'étape (b), un desdits au moins trois composés pouvant être l'ion chlorure contenu dans le bain de sels fondus chlorure, puis (d) introduire dans un bain de sels fondus chlorures comprenant ledit au moins un actinide à la température T lesdits au moins trois composés sélectionnés à l'étape (c). La présente invention concerne l'utilisation de différents mélanges ou compositions dans la préparation d'un combustible nucléaire, lors de son fonctionnement ou encore lors de son retraitement.

Processed by Luminess, 75001 PARIS (FR)

**Description**

**DOMAINE TECHNIQUE**

La présente invention concerne le domaine général des bains de sels fondus et, plus particulièrement, des réacteurs nucléaires à sels fondus.

Plus particulièrement, la présente invention propose un procédé permettant de contrôler l'état et/ou le degré d'oxydation d'un ou de plusieurs actinide(s) aussi bien lors de la synthèse du bain de sels fondus chlorures pour une utilisation dans un réacteur nucléaire que lors du fonctionnement de ce réacteur ou encore lors du retraitement du bain de sels fondus chlorures usé. Ce procédé implique la mise en contact du bain avec un mélange de composés gazeux ou non, judicieusement sélectionné.

**ÉTAT DE LA TECHNIQUE ANTÉRIEURE**

Les réacteurs nucléaires à sels fondus (ou MSR pour « Molten Salt Reactors » en anglais) sont une catégorie de réacteurs nucléaires qui présente plusieurs caractéristiques avantageuses par rapport aux réacteurs à eau légère (ou LWR pour « Light Water Reactors ») traditionnels. En effet, les LWR utilisent généralement un combustible solide ayant une longue période radioactive et avoir une utilisation du combustible relativement inefficace moyennant quoi des déchets dangereux et à vie longue peuvent être produits.

Les MSR sont une classe de réacteurs à fission nucléaire dans lesquels le liquide de refroidissement primaire, ou même le combustible lui-même, est un mélange de sels fondus. En d'autres termes, dans les MSR, le fluide caloporteur utilisé pour évacuer l'énergie thermique produite dans le réacteur, à base de sels fondus, typiquement chlorures ou fluorures de métaux alcalins ou alcalinoterreux, contient aussi le combustible nucléaire en solution ou suspension. En général, les MSR peuvent fournir de l'énergie de manière plus sûre et à moindre coût que les LWR.

Les éléments de combustible dissous dans les sels varient mais peuvent comprendre du thorium, de l'uranium, du plutonium ou d'autres actinides. Dans une certaine configuration, le MSR peut être conçu pour fonctionner dans un cycle de combustible au thorium, dans lequel le thorium absorbe des neutrons et est transmuté en uranium-233, qui devient le combustible principal.

Dans les MSR, les sels spécifiques sont choisis pour leurs excellentes capacités de transfert de chaleur, leur grande stabilité chimique et leur comportement neutre vis-à-vis de la radiation.

En effet, la sélection de sels fondus doit tenir compte non seulement de la neutronique, de leurs propriétés physico-chimiques, de leurs températures de fusion et de fonctionnement, de la solubilité de l'uranium et du plutonium et de leur retraitement, mais aussi des exigences en termes de densité de puissance et de dimension. Sur cette base, l'utilisation de sels fluorés combinés au cycle du combustible Uranium-Plutonium n'apparait pas être la plus appropriée notamment du fait de la faible solubilité du plutonium dans ces sels et d'un risque de précipitation de l'uranium et du plutonium. De plus, les températures de fonctionnement avec des sels fondus fluorures sont généralement plus élevées qu'avec des sels fondus chlorures ce qui augmente les cinétiques de corrosion des matériaux du réacteur et diminue leurs tenues mécaniques.

Pour cette raison, à l'heure actuelle, de nombreux concepts de réacteurs à sels fondus exploitant des sels de chlorures fondus sont développés à travers le monde.

Du fait de l'intérêt grandissant des réacteurs nucléaires à sels fondus chlorures, ils font l'objet de nombreux travaux, d'une part, au niveau de la synthèse des sels combustibles nucléaires i.e. des chlorures d'actinides dont on cherche la maîtrise de la composition durant la vie du réacteur et, d'autre part, au niveau du retraitement des sels combustibles usés.

Les inventeurs se sont donc fixé pour but de proposer un procédé permettant non seulement de contrôler les actinides mis en oeuvre lors de la synthèse des sels combustibles nucléaires mais aussi lors de leur retraitement dans le cas de combustibles usés.

**EXPOSÉ DE L'INVENTION**

La présente invention permet d'atteindre le but que se sont fixé les inventeurs. En effet, les travaux des inventeurs ont montré qu'il était possible de contrôler l'état et le degré d'oxydation des actinides contenus dans un bain de sels fondus chlorures en mettant en contact ce dernier avec au moins trois composés judicieusement sélectionnés, un desdits au moins trois composés pouvant être l'ion chlorure contenu dans le bain de sels fondus chlorures.

Ce procédé trouve un intérêt de la synthèse d'un bain de sels fondus chlorures au retraitement d'un tel bain usé. Plus particulièrement, le procédé selon l'invention peut être mis en oeuvre (i) lors de la préparation d'un bain de sels fondus chlorures, (ii) durant son utilisation et notamment pour le maintenir dans son domaine de stabilité ou encore (iii) lors de certaines étapes de son retraitement telles que la chloration et la précipitation.

Plus particulièrement, la présente invention concerne un procédé pour obtenir un bain de sels fondus chlorures comprenant au moins un actinide dans lequel l'état et/ou le degré d'oxydation dudit au moins un actinide sont prédéterminés, comprenant les étapes suivantes :

a) établir, pour ledit au moins un actinide, son diagramme potentiel-oxoacidité à une température T donnée dans un bain de sels fondus chlorures,
b) à partir du diagramme potentiel-oxoacidité établi à l'étape a), définir le domaine de potentiel-oxoacidité dans lequel ledit au moins un actinide se trouve dans l'état et/ou le degré d'oxydation prédéterminés,
c) sélectionner au moins trois composés différents permettant de fixer, à la température T, le potentiel et l'oxoacidité du bain de sels fondus chlorures dans le domaine défini à l'étape b), un desdits au moins trois composés pouvant être l'ion chlorure contenu dans le bain de sels fondus chlorures puis
d) introduire dans un bain de sels fondus chlorures comprenant ledit au moins un actinide à la température T lesdits au moins trois composés sélectionnés à l'étape c).

Par « état » d'un actinide, on entend dans le cadre de l'invention un actinide en solution, un actinide sous forme gazeuse ou encore un actinide sous forme précipitée. En d'autres termes, le procédé selon l'invention permet de dissoudre dans un bain de sels fondus chlorures, de volatiliser à partir d'un bain de sels fondus chlorures ou de précipiter un actinide dans un bain de sels fondus chlorures.

Dans le cadre du procédé selon l'invention, le degré d'oxydation prédéterminé pour un actinide peut être choisi parmi les différents degrés d'oxydation que peut présenter un tel actinide. A titre d'exemples, lorsque l'actinide concerné est l'uranium, le degré d'oxydation prédéterminé de cet actinide peut être choisi dans le groupe constitué par degré d'oxydation +3, le degré d'oxydation +4, le degré d'oxydation +5 et le dans le degré d'oxydation +6.

Dans un mode de réalisation particulier, le procédé selon l'invention vise à obtenir un bain de sels fondus chlorures comprenant au moins deux actinides différents dans lequel l'état et/ou le degré d'oxydation desdits au moins deux actinides sont prédéterminés. En d'autres termes, le bain de sels fondus chlorures comprend au moins deux actinides différents dont l'état et/ou le degré d'oxydation desdits au moins deux actinides sont prédéterminés et le procédé comprend les étapes suivantes :

a) établir, pour chacun desdits au moins deux actinides, son diagramme potentiel-oxoacidité à une température T donnée dans un bain de sels fondus chlorures,
b) à partir des diagrammes potentiel-oxoacidité établis à l'étape (a), définir le domaine de potentiel-oxoacidité dans lequel lesdits au moins deux actinides se trouvent dans l'état et/ou le degré d'oxydation prédéterminés,
c) sélectionner au moins trois composés différents permettant de fixer, à la température T, le potentiel et l'oxo-acidité du bain de sels fondus chlorures dans le domaine défini à l'étape b), un desdits au moins trois composés pouvant être l'ion chlorure contenu dans le bain de sels fondus chlorures puis
d) mettre en contact, un bain de sels fondus chlorures comprenant lesdits au moins au moins deux actinides à la température T et lesdits au moins trois composés sélectionnés à l'étape c).

Dans le procédé selon l'invention, la température T est choisie parmi les températures classiquement mises en oeuvre dans les réacteurs nucléaires à sels fondus. Typiquement, la température T est comprise entre 450°C et 1000°C. Il convient de noter que les raisonnements liés aux calculs présentés dans la partie expérimentale ci-après sont applicables à un tel domaine de températures.

Dans le cadre du procédé selon l'invention, tout type de sel chlorure utilisé dans les MSR est utilisable. Avantageusement, on choisira des sels de chlorures aptes à former des eutectiques à bas point de fusion, de l'ordre de 500°C, avec de bonnes solubilités du couple Uranium/Plutonium.

Par conséquent, dans le cadre du procédé selon l'invention, le bain de sels fondus chlorures comprend au moins un sel choisi dans le groupe constitué par le chlorure de sodium (NaCl), le dichlorure de magnésium (MgCl$_2$), le chlorure de potassium (KCl), le chlorure de lithium (LiCl), le dichlorure de calcium (CaCl$_2$) et un de leurs mélanges.

Cependant, outre le mélange LiCl-KCl couramment étudié, NaCl seul présente des caractéristiques intéressantes : il peut fournir un eutectique avec l'uranium et le plutonium à des températures proches de 500°C. D'un point de vue neutronique, le sodium est le meilleur élément suivi assez loin par le calcium (10 fois plus d'absorptions). De fait, dans le cadre du procédé selon l'invention, le bain de sels fondus chlorures comprend au moins du chlorure de sodium (NaCl).

Pour le ou les actinides pour lequel/lesquels on souhaite avoir un état et/ou un degré d'oxydation donné dans le bain de sels fondus chlorures à la température T, on réalise le ou les diagramme(s) potentiel-oxoacidité.

Un diagramme potentiel-oxoacidité est également connu sous l'expression « diagramme thermodynamique ». Un tel diagramme résume les propriétés thermodynamiques d'un système à une température T donnée.

Dans le ou les diagramme(s) établi(s) à l'étape a), l'axe des potentiels est référencé par rapport au couple redox Cl$_2$(1 atm)/Cl$^-$ (a=1) dans un bain de sels fondus chlorures et notamment dans un bain de sels fondus chlorures contenant du NaCl. L'activité du chlorure est fixée à 1 (cf partie expérimentale ci-après) mais l'homme du métier saura déterminer sans effort inventif si cette valeur doit être rectifiée lors de la mise en oeuvre du procédé de l'invention.

L'axe de l'acidité dépend du sel de chlorure utilisé. On parle, dans les sels fondus, d'oxo-acidité car l'acidité est portée par l'anion $O^{2-}$. L'axe de l'acidité ou de l'oxo-acidité est exprimée par le cologarithme de l'anion $O^{2-}$ : $p(aO^{2-})$ = $-\log(a(O^{2-}))$.

En d'autres termes, lorsque le sel fondu chlorure utilisé est du NaCl, l'axe de l'acidité ou de l'oxo-acidité du ou des diagramme(s) établi(s) à l'étape a), est exprimée par le cologarithme $pa(Na_2O)$ (= - $\log a(Na_2O)$).

Lorsque le sel fondu chlorure utilisé est du $MgCl_2$, l'axe de l'acidité ou de l'oxo-acidité du ou des diagramme(s) établi(s) à l'étape a), est exprimée par le cologarithme $pa(MgO)$ (= - $\log a(MgO)$).

Lorsque le sel fondu chlorure utilisé est du KCl, l'axe de l'acidité ou de l'oxo-acidité du ou des diagramme(s) établi(s) à l'étape a), est exprimée par le cologarithme $pa(K_2O)$ (= - $\log a(K_2O)$).

Lorsque le sel fondu chlorure utilisé est du LiCl, l'axe de l'acidité ou de l'oxo-acidité du ou des diagramme(s) établi(s) à l'étape a), est exprimée par le cologarithme $pa(Li_2O)$ (= - $\log a(Li_2O)$).

Lorsque le sel fondu chlorure utilisé est du $CaCl_2$, l'axe de l'acidité ou de l'oxo-acidité du ou des diagramme(s) établi(s) à l'étape a), est exprimée par le cologarithme $pa(CaO)$ (= - $\log a(CaO)$).

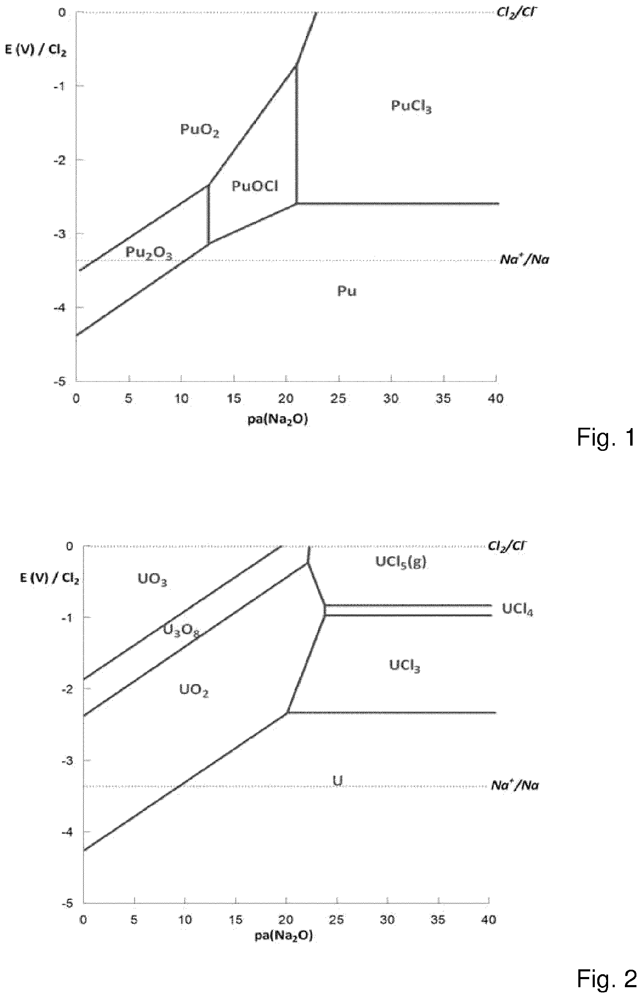

Lorsque le procédé selon l'invention implique un seul actinide, l'étape b) est réalisée par simple observation du diagramme potentiel-oxoacidité établi à l'étape a). Cet aspect est illustré dans la partie expérimentale ci-après pour l'uranium et le plutonium, respectivement aux Figures 1 et 2.

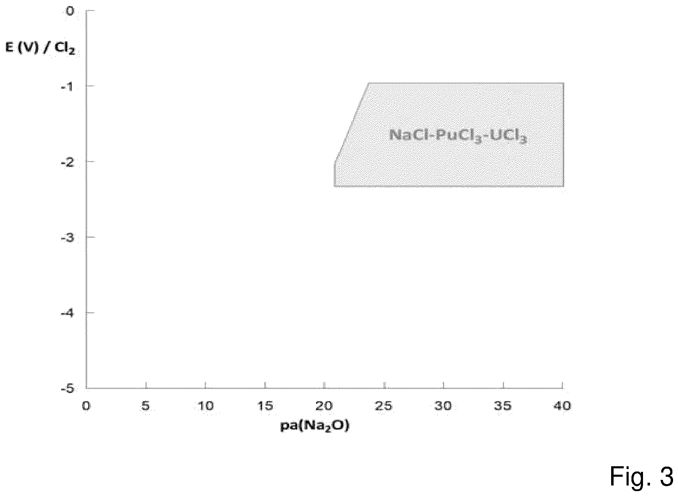

Lorsque le procédé selon l'invention implique au moins deux actinides différents, l'étape b) est réalisée en juxtaposant les diagrammes potentiel-oxoacidité établis à l'étape a) pour chacun des actinides et en sélectionnant le domaine dans lequel les différents actinides considérés se trouvent dans l'état et/ou le degré d'oxydation souhaité. Cet aspect est illustré dans la partie expérimentale ci-après pour l'uranium et le plutonium, à la Figure 3.

La présente invention s'applique à tout actinide susceptible d'être présent dans un réacteur nucléaire à sels fondus chlorures et ce, quel que soit l'isotope de cet actinide.

Dans un mode de réalisation particulier du procédé selon l'invention, le ou les actinide(s) concerné(s) par le procédé selon l'invention comprennent l'uranium et les transuraniens (TRU). Les TRU sont des éléments que l'on retrouve dans les combustibles usés. Il s'agit du plutonium et des actinides dits « mineurs » car produits en faible quantité. Ces actinides mineurs représentent actuellement la plus grande partie des déchets résultant du fonctionnement d'un réacteur nucléaire à sels fondus et notamment à sels fondus chlorures.

Il est envisagé d'utiliser ces actinides mineurs et notamment l'américium pour les transmuter, c'est-à-dire les transformer en d'autres radionucléides de période radioactive plus courte dans des réacteurs avancés à neutrons rapides dits « de quatrième génération ». Le procédé selon l'invention trouve donc une application particulière pour cet aspect. En effet, via le procédé selon l'invention, les actinides mineurs peuvent être séparés i.e. précipités lors du traitement des combustibles usés pour être chargés dans des réacteurs avancés à neutrons rapides dits « de quatrième génération ».

Dans un mode de réalisation plus particulier du procédé selon l'invention, ledit au moins un actinide ou lesdits au moins deux actinides est/sont choisi(s) dans le groupe constitué par le thorium (Th), l'uranium (U), le plutonium (Pu), le neptunium (Np), l'américium (Am) et le curium (Cm).

Dans un mode de réalisation plus particulier encore du procédé selon l'invention, ledit au moins un actinide ou lesdits au moins deux actinides comprend/comprennent de l'uranium (U) et/ou du plutonium (Pu).

Comme précédemment expliqué, le procédé selon l'invention se base sur la sélection d'au moins trois composés différents qui permettent de maintenir, à la température T, le bain de sels fondus chlorures dans le domaine dans lequel l'actinide considéré ou les différents actinides considérés se trouve(nt) dans l'état et/ou le degré d'oxydation souhaité.

Avantageusement, les composés différents mis en oeuvre lors du procédé selon l'invention sont choisis parmi des composés gazeux, l'ion chlorure du bain de sels fondus chlorures et du carbone.

De plus, pour les raisons évoquées dans la partie expérimentale ci-après, les différents composés mis en oeuvre lors du procédé selon l'invention comprennent deux composés formant un couple redox, deux composés formant un couple acido-basique et au moins un gaz chloré.

Lors de l'étape c) du procédé selon l'invention, la sélection des au moins trois composés différents permettant de fixer, à la température T, le potentiel et l'oxoacidité du bain de sels fondus chlorures dans le domaine défini à l'étape b), se fait par calcul sur la base des réactions redox et acido-basique mises en jeu entre lesdits au moins trois composés différents et des relations associées du type relation de Nernst et constante d'équilibre.

Lorsque le mélange d'au moins trois composés comprend des gaz, le calcul du potentiel et de l'oxo-acidité de ce mélange en faisant varier la pression partielle des différents gaz entre 0,5 et $10^{-6}$ atm.

Ainsi, en fixant, à la température T, le potentiel et l'oxoacidité du bain de sels fondus chlorures dans le domaine défini à l'étape b), le ou les actinides concerné(s) se retrouve(nt) dans un tel domaine et présente(nt) donc dans l'état et/ou le degré d'oxydation souhaité i.e. prédéterminé.

Les parties III.1 à III.4 dans la partie expérimentale ci-après illustrent cet aspect de l'invention pour des mélanges comprenant 3 ou 4 composés différents. L'homme du métier saura sur la base de cet enseignement l'extrapoler à tout mélange d'au moins trois composés différents.

Plus particulièrement, les différents composés mis en oeuvre lors du procédé selon l'invention sont choisis dans le groupe constitué par l'eau ($H_2O$), le dihydrogène ($H_2$), l'acide chlorhydrique (HCl), le dichlore ($Cl_2$), l'ion chlorure ($Cl^-$), le carbone (C), l'oxyde de carbone (CO), le dioxyde de carbone ($CO_2$), le tétrachlorure de carbone (ou térachlorométhane, $CCl_4$), le dichlorure de carbonyle (ou phosgène, $COCl_2$), le chlorure de thionyle ($SOCl_2$), le dichlorure de disoufre ($S_2Cl_2$) et le dioxyde de soufre ($SOCl_2$).

Certains de ces composés peuvent se présenter sous forme gazeuse. C'est le cas pour l'eau ($H_2O(g)$), le dihydrogène ($H_2(g)$), l'acide chlorhydrique (HCl(g)), le dichlore ($Cl_2(g)$), l'oxyde de carbone (CO(g)), le dioxyde de carbone ($CO_2(g)$), le tétrachlorure de carbone (ou térachlorométhane, $CCl_4(g)$), le dichlorure de carbonyle (ou phosgène, $COCl_2(g)$), le chlorure de thionyle ($sOCl_2(g)$), le dichlorure de disoufre ($S_2Cl_2(g)$) et le dioxyde de soufre ($sOCl_2(g)$).

Le carbone (C), quant à lui, se présente sous forme solide (C(s)). Il peut notamment être apporté au moyen d'un cane graphite qui amène le ou les autre(s) composé(s) gazeux associé(s) au carbone dans le bain de sels fondus chlorures lors de la mise en contact de l'étape d) du procédé selon l'invention. On peut également introduire le C(s) sous forme d'une poudre de graphite dispersée dans le bain de sels fondus. Dans les calculs sur lesquels se fondent le procédé selon l'invention, l'activité du carbone est fixée à 1.

L'ion chlorure ($Cl^-$) se présente sous forme solubilisée et est déjà présent dans le bain de sels fondus chlorures. Dans les calculs sur lesquels se fondent le procédé selon l'invention, l'activité de l'ion chlorure est fixée à 1. Lorsque les au moins trois composés comprennent l'ion chlorure ($Cl^-$), on parlera plutôt d'une combinaison puisque ces éléments ne peuvent être utilisés sous forme d'un mélange, l'ion chlorure étant déjà présent dans le bain de sels fondus chlorures.

Ainsi, les au moins trois composés sélectionnés lors de l'étape c) peuvent se présenter sous forme (i) d'un mélange exclusivement gazeux, (ii) d'un mélange comprenant un ou plusieurs gaz et un solide (i.e. le carbone), (iii) d'une combinaison comprenant un ou plusieurs gaz et un ion (i.e. l'ion chlorure) ou encore (iv) d'une combinaison comprenant un ou plusieurs gaz, un solide (i.e. le carbone) et un ion (i.e. l'ion chlorure).

La mise en contact lors de l'étape d) du procédé selon l'invention consiste à introduire les trois composés ou plus dans le bain de sels fondus chlorures. Les composés peuvent être introduits les uns après les autres, par groupe ou tous simultanément. Cette dernière option sera avantageusement choisie.

Il est évident que, lorsque, parmi les au moins trois composés sélectionnés à l'étape c), on trouve l'ion chlorure. La mise en contact lors de l'étape d) du procédé selon l'invention consiste essentiellement à mettre en contact le bain de sels fondus chlorures avec les autres composés de ce mélange sélectionné à l'étape c) puisque l'ion chlorure se trouve déjà dans le bain de sels fondus chlorures.

Dans un premier mode de réalisation, le bain de sels fondus chlorures mis en oeuvre lors de l'étape d) est un bain de sels fondus chlorures en cours de préparation. Dans ce cas, l'actinide concerné est typiquement un oxyde d'actinide à partir duquel on souhaite préparer un chlorure d'actinide et notamment du trichlorure d'uranium. Par conséquent, dans ce premier mode de réalisation, la mise en contact lors de l'étape d) se fait typiquement dans la zone critique de production de chaleur que présentent les réacteurs à sels fondus.

Dans un deuxième mode de réalisation, le bain de sels fondus chlorures mis en oeuvre lors de l'étape d) est un bain de sels fondus chlorures en cours d'utilisation dont on souhaite maintenir stable la composition. Par conséquent, dans ce deuxième mode de réalisation, la mise en contact lors de l'étape d) se fait également dans la zone critique de production de chaleur que présentent les réacteurs à sels fondus.

Dans un troisième mode de réalisation, le bain de sels fondus chlorures mis en oeuvre lors de l'étape d) est un bain de sels fondus chlorures usé à partir duquel on souhaite récupérer, par précipitation, certains actinides et notamment les actinides mineurs tels que précédemment définis. Ce troisième mode de réalisation peut également être mis en oeuvre pour récupérer du sel combustible contenant notamment le plutonium afin de réinjecter, ce dernier une fois récupéré, dans le circuit combustible. Par conséquent, dans ce troisième mode de réalisation, la mise en contact lors de l'étape d) se fait typiquement dans une unité de retraitement que présentent les réacteurs à sels fondus. Ce troisième mode de réalisation peut également mis en oeuvre en continu ou en batch.

L'homme du métier saura déterminer, sans effort inventif, la durée pendant laquelle la mise en contact lors de l'étape d) du procédé selon l'invention doit être maintenue et ce, en fonction du but recherché i.e. amener le ou les actinide(s) à l'état et/ou au degré d'oxydation prédéterminé. Typiquement la durée de l'étape d) du procédé selon l'invention est comprise entre 30 min et 72 h et, notamment, entre 1 h et 48 h.

Dans un mode de réalisation particulier, les au moins trois composés différents sont choisis dans le groupe constitué par $HCl/H_2O/H_2$, $Cl_2/O_2/ion\ Cl^-$, $Cl_2/CO/C/ion\ Cl^-$, $Cl_2/CO_2/C/ion\ Cl^-$, $Cl_2/CO_2/CO/ion\ Cl^-$, $CCl_4/CO_2/C$, $CCl_4/CO_2/CO$, $SOCl_2/SO_2/S_2Cl_2$, $COCl_2/CO_2/C$, $COCl_2/CO_2/CO$, $CCl_4/CO_2/HCl/H_2$ et $CCl_4/CO/HCl/H_2$.

Les propriétés en termes de potentiel et d'oxo-acidité du mélange gazeux $HCl/H_2O/H_2$, de la combinaison $Cl_2(g)/CO_2(g)/C(s)/ion\ Cl^-$, du mélange gazeux $SOCl_2/SO_2/S_2Cl_2$ et du mélange gazeux $CCl_4/CO/HCl/H_2$ sont illustrées respectivement aux points III.1 à III.4 de la partie expérimentale ci-après.

De même, les réactions redox et l'équilibre acido-basique impliquées pour la combinaison $Cl_2(g)/O_2(g)/ion\ Cl^-$, la combinaison $Cl_2(g)/CO(g)/C(s)/ion\ Cl^-$, la combinaison $Cl_2(g)/CO_2(g)/CO(g)/ion\ Cl^-$, le mélange $CCl_4(g)/CO_2(g)/C(s)$, le

mélange gazeux $CCl_4/CO_2/CO$, le mélange gazeux $COCl_2/CO_2/C$, le mélange gazeux $COCl_2/CO_2/CO$ et le mélange gazeux $CCl_4/CO_2/HCl/H_2$ sont données au point III.5 de la partie expérimentale ci-après.

A partir des travaux illustrés dans la partie expérimentale ci-après, il est possible de sélectionner des compositions ou mélanges d'au moins trois composés différents pour des applications particulières.

Ainsi, la présente invention concerne :

- l'utilisation du mélange $CCl_4/CO_2/HCl/H_2$ ou du mélange $CCl_4/CO/HCl/H_2$ pour synthétiser du trichlorure d'uranium ($UCl_3$) dans un bain de sels fondus chlorures, notamment à base de NaCl, et contenant au moins de l'uranium ou pour contrôler le redox du sel combustible dans un tel bain.
- l'utilisation de la combinaison $Cl_2/CO/C/Cl^-$, de la combinaison $Cl_2/CO_2/C/Cl^-$, de la combinaison $Cl_2/CO_2/CO/Cl^-$, du mélange $CCl_4/CO_2/C$, du mélange $CCl_4/CO_2/CO$, du mélange $SOCl_2/SO_2/S_2Cl_2$, du mélange $COCl_2/CO_2/C$, du mélange $COCl_2/CO_2/CO$, du mélange $CCl_4/CO_2/HCl/H_2$ ou du mélange $CCl_4/CO/HCl/H_2$ pour synthétiser du trichlorure de plutonium ($PuCl_3$) dans un bain de sels fondus chlorures, notamment à base de NaCl, et contenant au moins du plutonium.
- l'utilisation du mélange $HCl/H_2O/H_2$ ou de la combinaison $Cl_2/O_2/Cl^-$ pour précipiter des oxydes d'uranium et de plutonium dans un bain de sels fondus chlorures, notamment à base de NaCl contenant au moins de l'uranium et au moins du plutonium.
- l'utilisation de la combinaison $Cl_2/CO/C/Cl^-$, de la combinaison $Cl_2/CO_2/C/Cl^-$, de $Cl_2/CO_2/CO/Cl^-$, du mélange $CCl_4/CO_2/C$, du mélange $CCl_4/CO_2/CO$, du mélange $SOCl_2/SO_2/S_2Cl_2$, du mélange $COCl_2/CO_2/C$ ou du mélange $COCl_2/CO_2/CO$ pour la chloration du sel combustible et la séparation de l'uranium et du plutonium dans un bain de sels fondus chlorures, notamment à base de NaCl contenant au moins de l'uranium et au moins du plutonium.

D'autres caractéristiques et avantages de la présente invention apparaîtront encore à l'homme du métier à la lecture des exemples ci-dessous donnés à titre illustratif et non limitatif, en référence aux figures annexées.

## BRÈVE DESCRIPTION DES DESSINS

La Figure 1 présente le diagramme thermodynamique du plutonium calculé en milieu chlorure à 700°C ($x(PuCl_3)$ =0.31).

La Figure 2 présente le diagramme thermodynamique de l'uranium calculé en milieu chlorure à 700°C ($x(UCl_3)$=0.05)

La Figure 3 présente le diagramme thermodynamique de stabilité du sel combustible $NaCl$-$PuCl_3$-$UCl_3$ (64-31-5 mol%) à 700°C.

La Figure 4 présente les limites de la zone d'oxo-acidité que prend le mélange gazeux $HCl/H_2O$ (pressions partielles comprises entre $10^{-3}$ et $10^{-1}$ atm).

La Figure 5 présente les limites de la zone de potentiel que prend le mélange gazeux $HCl/H_2$ (pressions partielles comprises entre $10^{-3}$ et $10^{-1}$ atm).

La Figure 6 présente les domaines de stabilité thermodynamique du mélange gazeux $HCl/H_2O/H_2$ (polygone plein) du sel combustible à 700°C (polygone vide). Les pressions partielles des gaz varient de 0.5 à $10^{-6}$ atm.

La Figure 7 présente la superposition des diagrammes thermodynamiques de l'uranium et du plutonium avec le domaine de stabilité du mélange gazeux $HCl/H_2O/H_2$.

La Figure 8 présente la superposition du diagramme de stabilité du sel $NaCl$-$PuCl_3$-$UCl_3$ avec le domaine de stabilité de la combinaison $Cl_2/CO_2/C$/ion chlorure.

La Figure 9 présente la superposition des diagrammes thermodynamiques de l'uranium et du plutonium avec le domaine de stabilité de la combinaison $Cl_2/CO_2/C$/ion chlorure.

La Figure 10 présente la superposition du diagramme de stabilité du sel $NaCl$-$PuCl_3$-$UCl_3$ avec le domaine de stabilité du mélange gazeux $SOCl_2/SO_2/S_2Cl_2$.

La Figure 11 présente la superposition des diagrammes thermodynamiques de l'uranium et du plutonium avec le domaine de stabilité du mélange gazeux $SOCl_2/SO_2/S_2Cl_2$.

La Figure 12 présente la superposition du diagramme de stabilité du sel $NaCl$-$PuCl_3$-$UCl_3$ avec le domaine de stabilité du mélange gazeux $CCl_4/CO/HCl/H_2$.

La Figure 13 présente la superposition des diagrammes thermodynamiques de l'uranium et du plutonium avec le domaine de stabilité du mélange gazeux $CCl_4/CO/HCl/H_2$.

## EXPOSÉ DÉTAILLÉ DE MODES DE RÉALISATION PARTICULIERS

I. Calculs des diagrammes thermodynamiques du sel fondu NaCl-PuCl$_3$-UCl$_3$ à 700°C.

Les diagrammes thermodynamiques potentiel-acidité ou potentiel-oxoacidité sont utilisés dans les mélanges sels fondus de manière analogue aux diagrammes de Pourbaix en solution aqueuse.

L'axe des potentiels est référencé par rapport au couple redox Cl$_2$(1 atm)/Cl$^-$ (a=1) dans un mélange de sels chlorures.

L'axe de l'acidité est représenté par pa(Na$_2$O) ( = - log a(Na$_2$O)) dans un sel à base de NaCl. On parlera dans les sels fondus d'oxo-acidité car l'acidité est portée par l'anion O$^{2-}$.

Les sels ou mélanges gazeux oxo-acides sont pauvres en ions oxyde, on les trouve à droite du diagramme potentiel-acidité alors que, à gauche du diagramme, sont situés les sels ou mélanges oxo-basiques.

On peut calculer, à partir d'une base de données des corps purs, les domaines de stabilité des différentes formes qu'un élément peut prendre dans un sel fondu. Les diagrammes du plutonium et de l'uranium sont présentés Figure 1 et Figure 2. Ils ont été calculés pour la composition du sel combustible des XAMR correspondant au mélange NaCl-PuCl$_3$-UCl$_3$ (64-31-5 mol%) à 700°C à l'aide de la base de données HSC Chemistry 6.0.

En ce qui concerne les calculs thermodynamiques, il existe généralement peu de différence en fonction de la température, l'étendue des domaines est sensiblement identique. Les raisonnements liés aux calculs présentés dans la partie expérimentale peuvent être appliqués à un domaine de température compris entre 450°C et 1000°C.

Le domaine de stabilité du sel NaCl-PuCl$_3$-UCl$_3$ (64-31-5 mol%) à 700°C se déduit des Figure 1 et Figure 2 comme le domaine dans lequel sont stables à la fois NaCl, PuCl$_3$ et UCl$_3$. Il est donné Figure 3.

II. Travaux préalables : utilisation des mélanges gazeux.

Les mélanges gazeux peuvent être utilisés pour fixer un potentiel ou une oxo-acidité d'intérêt dans un mélange de sels fondus.

Le principe consiste à fixer un potentiel à l'aide d'un système redox et une oxo-acidité à l'aide d'un couple acido-basique. Si l'on considère un couple redox seul, l'oxo-acidité ne sera pas contrôlée et, de la même manière, un couple acido-basique ne fixera pas le potentiel.

11.1. *Exemple de mélange gazeux contrôlant l'oxo-acidité*

Considérons le couple acido-basique H$_2$O/HCl, l'équilibre thermodynamique à considérer est le suivant :

$$2HCl\ (g) + Na_2O \rightarrow H_2O\ (g) + 2NaCl \qquad (1)$$

La constante d'équilibre est donnée par la relation :

$$K_{HCl/H2O} = \frac{P(H_2O)a(NaCl)^2}{P(HCl)^2 a(Na_2O)} \qquad (2)$$

On en déduit que :

$$pa(Na_2O) = \log K_{HCl/H2O} - 2\log a(NaCl) + \log \frac{P(HCl)^2}{P(H_2O)} \qquad (3)$$

Dans ces relations, a(M) et P(M) représentent respectivement l'activité et la pression partielle de l'élément M.

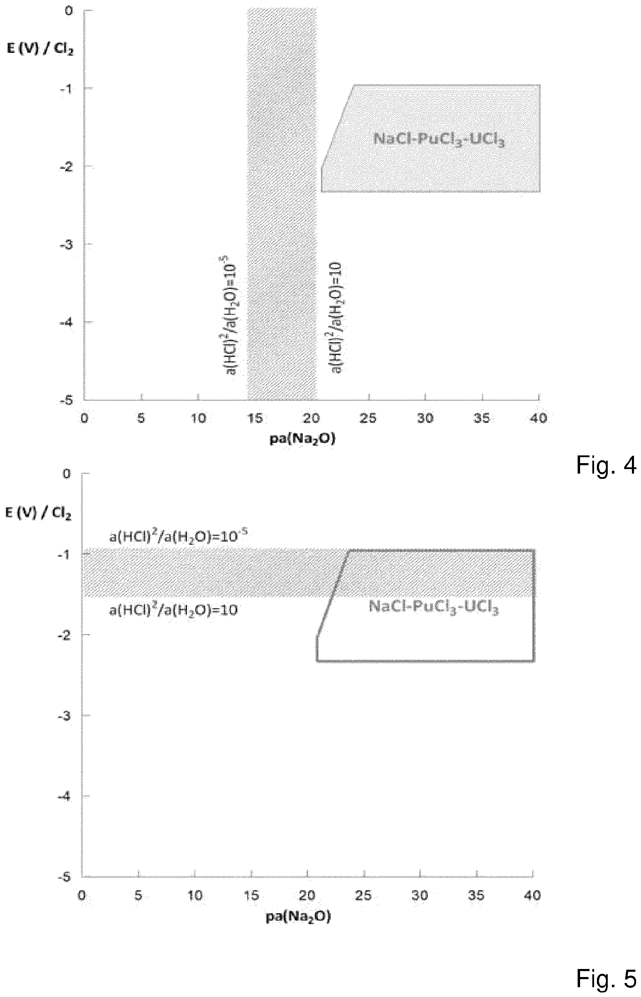

Dans le mélange ternaire considéré, l'activité de NaCl est considérée égale à sa fraction molaire. Par conséquent a(NaCl) = 0,64. On observe que la valeur de pa(Na$_2$O) dépend du rapport P(HCl)$^2$/P(H$_2$O). Si on considère des mélanges gazeux dont des pressions partielles de gaz sont comprises entre 10$^{-3}$ et 10$^{-1}$ atm, le rapport a(HCl)$^2$/a(H$_2$O) varie de 10$^{-5}$ à 10. On calcule ainsi deux valeurs de pa(Na$_2$O) qui délimitent la zone d'oxo-acidité fixée par le mélange gazeux. Les limites dépendent de la composition du mélange (Figure 4).

On note que rien ne fixe le potentiel sur la Figure 4.

II.2. *Exemple de mélange gazeux contrôlant le potentiel*

Considérons maintenant le couple redox HCl/H$_2$, la réaction redox associée est :

$$2HCl\ (g) + 2e \rightarrow H_2\ (g) + 2Cl^- \qquad (4)$$

La relation de Nernst associée est donnée par :

$$E_{HCl/H2} = E°_{HCl/H2} + \frac{2.3RT}{2F} \log \frac{P(HCl)^2}{P(H_2)a(Cl^-)^2} \qquad\qquad (5)$$

Dans cette relation, E est le potentiel d'équilibre, E° le potentiel standard du système redox, R est la constante des gaz parfaits (=8,314 J/K/mol), T la température (K) et F la constante de Faraday (= 96500 C/mol).

Dans un sel tel que NaCl-PuCl$_3$-UCl$_3$, l'activité des chlorures est probablement inférieure à 1. Néanmoins, la valeur n'ayant pas été encore déterminée expérimentalement, en première approximation, on prend pour les applications numériques présentées dans les travaux de cette description a(Cl$^-$) = 1.

On observe dans la relation (5) que la valeur du potentiel dépend du rapport $P(HCl)^2/P(H_2)$. On considère des mélanges gazeux dont les pressions partielles de gaz varient entre $10^{-3}$ et $10^{-1}$ atm. Dans ce cas, le rapport $P(HCl)^2/P(H_2)$ varie de $10^{-5}$ à 10. On calcule ainsi deux valeurs de potentiel $E_{HCl/H2}$ qui délimitent la zone de potentiel fixée par le mélange gazeux (Figure 5).

La Figure 5 montre que l'oxo-acidité n'est pas fixée par le mélange HCl/H$_2$.

III. Utilisation de mélanges selon l'invention.

III.1. *Mélange gazeux HCl/H$_2$O/H$_2$*

Les réactions et relations mathématiques établies pour ce mélange gazeux sont présentées dans le Tableau 1.

Tableau 1. Réactions mises en jeu dans le mélange gazeux HCl/H$_2$O/H$_2$ et relations associées

| Réaction redox | Relation de Nernst | E°(V)/Cl$_2$/Cl$^-$ | |
|---|---|---|---|
| $2HCl(g) + 2e \rightarrow H_2(g) + 2Cl^-$ | $E_{HCl/H2} = E°_{HCl/H2} + \frac{2.3RT}{2F} \log \frac{P(HCl)^2}{P(H_2)a(Cl^-)^2}$ | -1.04 | (6) |
| $H_2O(g) + 2NaCl + 2e \rightarrow H_2(g) + Na_2O + 2Cl^-$ | $E_{H2O/H2} = E°_{H2O/H2} + \frac{2.3RT}{2F} \log \frac{P(H_2O)a(NaCl)^2}{P(H_2)a(Na_2O)a(Cl^-)^2}$ | -2.88 | (7) |
| Réaction acido-basique | Constante d'équilibre | Log K | |
| $2HCl(g) + Na_2O \rightarrow H_2O(g) + 2NaCl$ | $K_{HCl/H2O} = \frac{P(H_2O)a(NaCl)^2}{P(HCl)^2a(Na_2O)}$ | 18.995 | (8) |

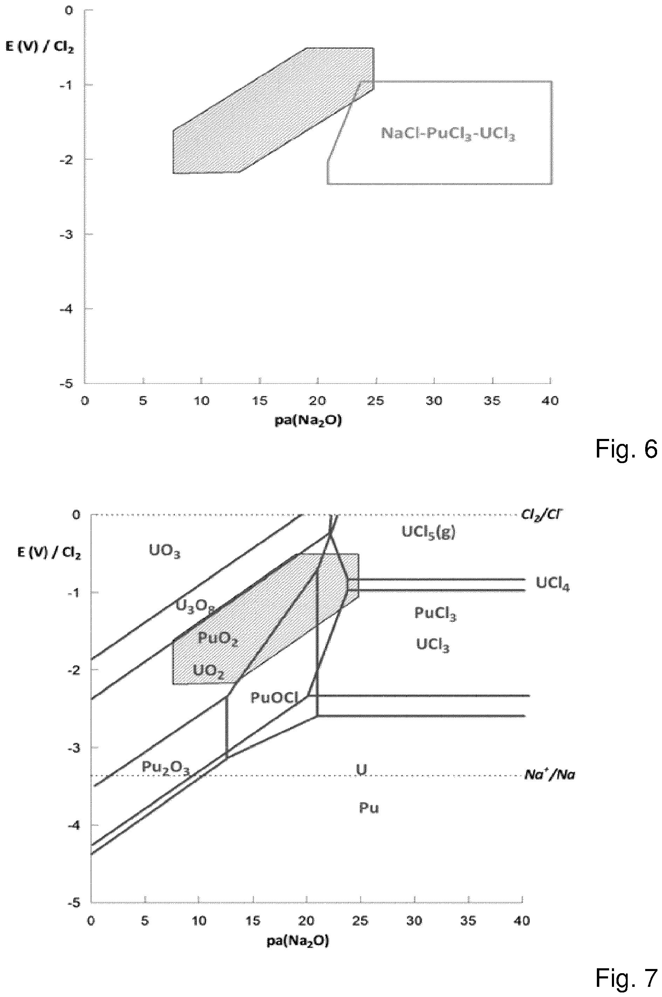

Le calcul du potentiel et de l'oxo-acidité a été réalisé en faisant varier les pressions partielles de HCl, H$_2$O et H$_2$ entre 0.5 et $10^{-6}$ atm. Le domaine de stabilité de ce mélange gazeux est présenté Figure 6.

On constate une zone commune réduite entre le mélange gazeux et le sel combustible.

Si on superpose la zone de stabilité du mélange gazeux avec les diagrammes de l'uranium et du plutonium, on obtient la Figure 7.

La zone de stabilité du mélange gazeux se situe majoritairement dans les domaines de stabilité du dioxyde d'uranium (UO$_2$) et du dioxyde de plutonium (PuO$_2$). Si l'on souhaite lors du retraitement précipiter ces éléments, l'utilisation de ce mélange gazeux serait adaptée.

III.2. *Combinaison Cl$_2$/CO$_2$/C/ion Cl$^-$*

Les réactions et relations mathématiques établies pour ce mélange sont présentées dans le Tableau 2.

Tableau 2. Réactions mises en jeu dans le mélange gazeux $Cl_2/CO_2/C/$ion $Cl^-$ et relations associées

| Réaction redox | Relation de Nernst | E°(V)/ $Cl_2/Cl^-$ | |
|---|---|---|---|
| $Cl_2(g) + 2e \rightarrow 2Cl^-$ | $E_{Cl2} = E°_{Cl2} + \dfrac{2.3RT}{2F}\log\dfrac{P(Cl_2)}{a(Cl^-)^2}$ | 0 | (9) |
| $CO_2(g) + 4NaCl + 4e \rightarrow C + 2Na_2O + 4Cl^-$ | $E_{CO2/C} = E°_{CO2/C} + \dfrac{2.3RT}{4F}\log\dfrac{P(CO_2)a(NaCl)^4}{a(Na_2O)^2a(C)a(Cl^-)^4}$ | - 2.896 | (10) |
| De (9) et (10) | $pa(Na_2O) = \dfrac{1}{2}\left[\dfrac{4F}{2.3RT}\left(E_{Cl2} - E°_{CO2/C}\right) - 4\log a(NaCl) - \log P(CO_2)\right]$ | | (11) |

Dans ce cas, le potentiel est fixé par la pression partielle de $Cl_2(g)$ et l'oxo-acidité par la relation (11) établie par la combinaison des relations (9) et (10). L'activité du carbone (a(C)) est fixée égale à 1 dans les calculs.

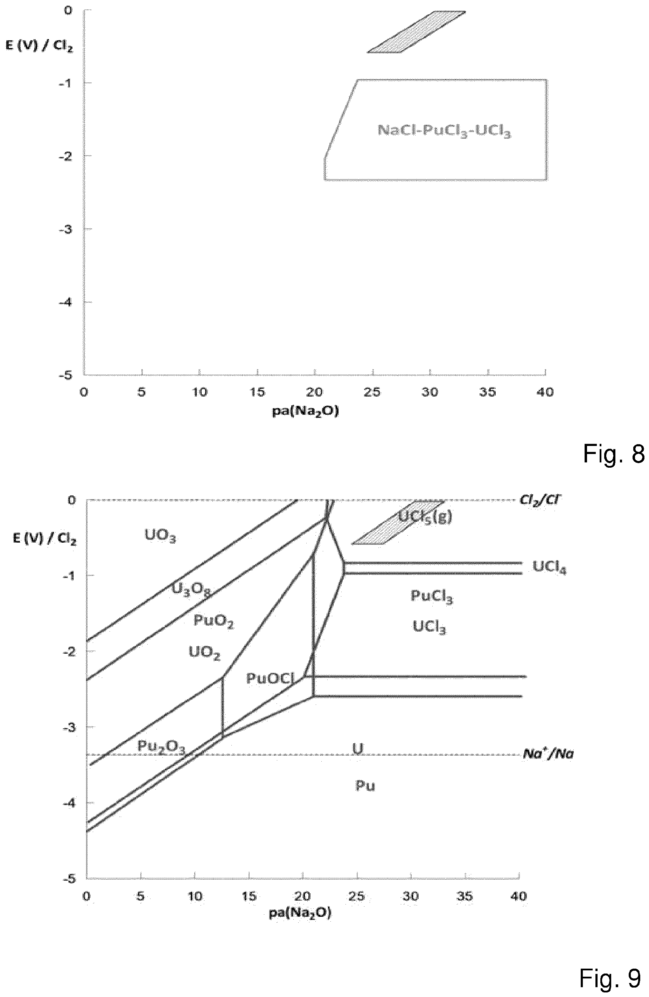

La Figure 8 et la Figure 9 présentent les diagrammes thermodynamiques calculés avec le mélange $Cl_2/CO_2/C/$ion $Cl^-$.

Ce mélange gazeux est intéressant pour préparer du $PuCl_3$ à partir de son oxyde et oxyder le $UCl_3$ en $UCl_5(g)$.

III.3. *Mélange gazeux $SOCl_2/SO_2/S_2Cl_2$*

L'oxo-acidité est fixée par le couple acido-basique $SOCl_2/SO_2$ et le redox par les couples $SOCl_2/S_2Cl_2$ et $SO_2/S_2Cl_2$. Les réactions et relations considérées sont données dans le Tableau 3.

Tableau 3. Réactions mises en jeu dans le mélange gazeux $SOCl_2/SO_2/S_2Cl_2$ et relations associées

| Réaction redox | Relation de Nernst | E°(V) /$Cl_2/Cl^-$ | |
|---|---|---|---|
| $2SOCl_2(g) + 4NaCl + 6e \rightarrow S_2Cl_2(g) + 2Na_2O + 6Cl^-$ | $E_{SOCl2/S2Cl2} = E°_{SOCl2/S2Cl2} + \dfrac{2.3RT}{6F}\log\dfrac{P(SOCl_2)^2a(NaCl)^4}{P(S_2Cl_2)a(Na_2O)^2a(Cl^-)^6}$ | -1,714 | (12) |
| $2SO_2(g) + 8NaCl + 6e \rightarrow S_2Cl_2(g) + 4Na_2O + 6Cl^-$ | $E_{SO2/S2Cl2} = E°_{SO2/S2Cl2} + \dfrac{2.3RT}{6F}\log\dfrac{P(SO_2)^2a(NaCl)^8}{P(S_2Cl_2)a(Na_2O)^4a(Cl^-)^6}$ | -3.449 | (13) |
| Equilibre acido-basique | Constante d'équilibre | log K | |
| $SOCl_2(g) + Na_2O \rightarrow SO_2(g) + 2NaCl$ | $K_{SOCl2/SO2} = \dfrac{P(SO_2)a(NaCl)^2}{P(SOCl_2)a(Na_2O)}$ | 26.961 | (14) |

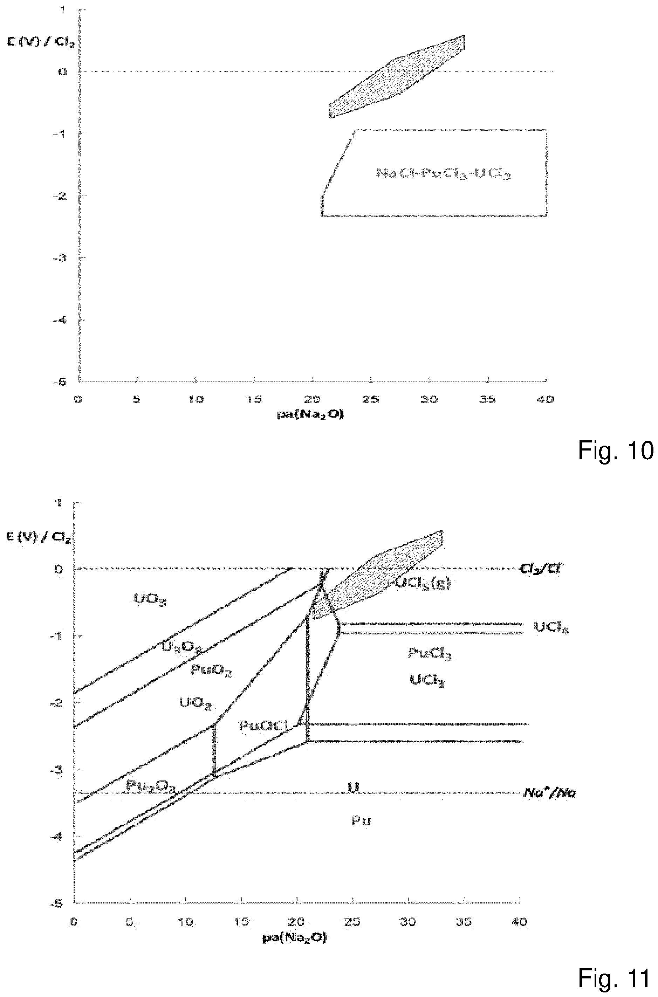

Les diagrammes thermodynamiques calculés sont présentés Figure 10 et Figure 11.

Ces diagrammes montrent un pouvoir oxydant très important. Cependant, ils sont moins oxo-acides que ceux contenant $CO(g)$ ou $CO_2(g)$. Ces mélanges gazeux ne présentent pas un intérêt particulier au regard de leur difficulté de manipulation.

III.4. *Mélange gazeux $CCl_4/CO/HCl/H_2$*

Aucun des mélanges gazeux considérés précédemment ne permet de stabiliser ou de synthétiser $UCl_3$. Il a été montré que le système redox $HCl/H_2$ permet d'atteindre des potentiels suffisamment petits pour être dans le domaine de stabilité de $UCl_3$. Cependant, en présence de $H_2O$, l'oxo-acidité est trop faible pour stabiliser le chlorure d'uranium. Les autres mélanges gazeux sont trop oxydants et conduisent à la stabilité préférentielle de $UCl_5(g)$.

On se propose alors de regarder un mélange de gaz constitué d'un couple acido-basique fortement oxo-acide et un couple redox ayant un fort pouvoir réducteur. Le choix s'est porté vers le mélange gazeux $CCl_4/CO/HCl/H_2$.

Les réactions et relations utilisées sont rassemblées dans le Tableau 4.

Tableau 4. Réactions mises en jeu dans le mélange gazeux *CCl₄/CO/HCl/H₂* et relations associées

| Réaction redox | Relation de Nernst | E°(V)/Cl₂/Cl⁻ | |
|---|---|---|---|
| 2HCl(g) + 2e → H₂(g) + 2Cl⁻ | $$E_{HCl/H2} = E°_{HCl/H2} + \frac{2.3RT}{2F}\log\frac{P(HCl)^2}{P(H_2)a(Cl^-)^2}$$ | - 1.043 | (15) |
| CCl₄(g) + Na₂O + 2e → CO(g) + 2NaCl + 2Cl⁻ | $$E_{CCl4/CO} = E°_{CCl4/CO} + \frac{2.3RT}{2F}\log\frac{P(CCl_4)a(Na_2O)}{P(CO)a(NaCl)^2 a(Cl^-)^2}$$ | 3,097 | (16) |
| De (15) et (16): $$pa(Na_2O) = \frac{2F}{2.3RT}\left(E°_{CCl4/CO} - E_{HCl/H2}\right) - 2\log a(NaCl) + \log P(CCl_4) - \log P(CO)$$ | | | (17) |

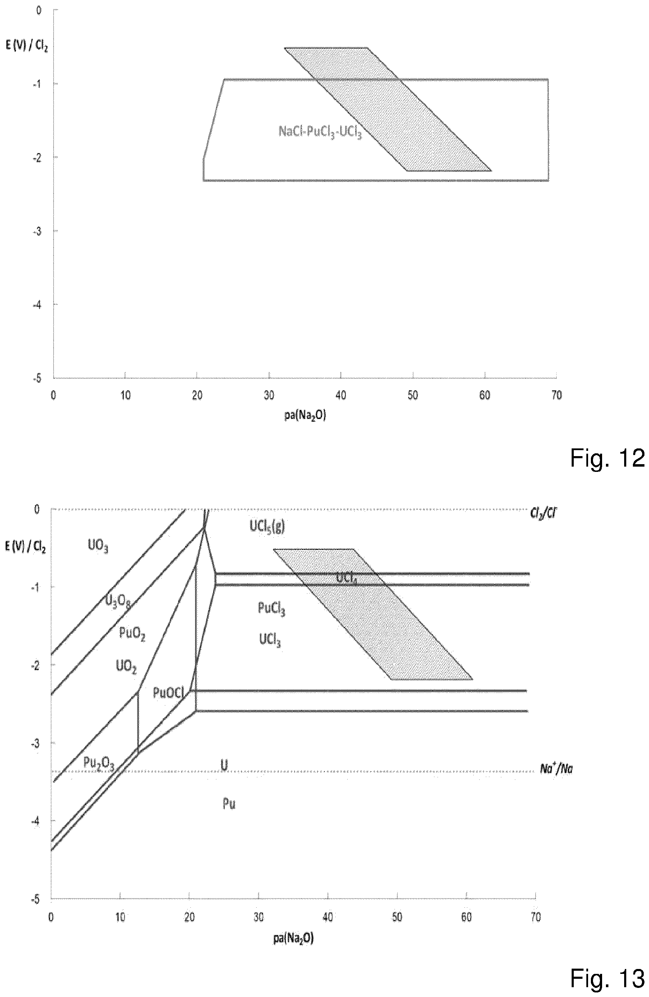

Les diagrammes thermodynamiques sont donnés Figure 12 et Figure 13.

On constate que ce mélange gazeux permet d'atteindre des oxo-acidité extrêmement grandes. Ce mélange gazeux est donc très intéressant pour fabriquer le UCl₃ à partir de U₃O₈ par exemple. Par ailleurs, il permet de maintenir le sel combustible dans son domaine de stabilité et peut être une solution pour pallier les évolutions de composition du sel combustible inhérentes au fonctionnement du réacteur.

III.5. *Réactions et relations considérées pour les autres mélanges étudiés*

i) Combinaison Cl₂(g)/O₂(g)/ion Cl⁻

Le Tableau 5 présente les réactions et relations considérées pour cette combinaison.

Tableau 5. Réactions mises en jeu dans la combinaison Cl₂(g)/O₂(g)/ion Cl⁻ et relations associées

| Réaction redox | Relation de Nernst | E°(V)/Cl₂/Cl⁻ | |
|---|---|---|---|
| Cl₂(g) + 2e → 2Cl⁻ | $$E_{Cl2} = E°_{Cl2} + \frac{2.3RT}{2F}\log\frac{P(Cl_2)}{P(Cl^-)^2}$$ | 0 | (18) |
| O₂(g) + 4NaCl + 4e → 2Na₂O + 4Cl⁻ | $$E_{O2} = E°_{O2} + \frac{2.3RT}{4F}\log\frac{P(O_2)a(NaCl)^4}{a(Na_2O)^2 a(Cl^-)^4}$$ | -1.87 | (19) |
| Equilibre acido-basique | Constante d'équilibre | log K | |
| 2Cl₂(g) + 2Na₂O → O₂(g) + 4NaCl | $$K_{Cl2/O2} = \frac{P(O_2)a(NaCl)^4}{P(Cl_2)^2 a(Na_2O)^2}$$ | 38.758 | (20 |

ii) Combinaison Cl₂(g)/CO(g)/C(s)/ion Cl⁻

Le Tableau 6 présente les réactions et relations considérées pour cette combinaison introduit, pour sa partie gazeuse, avec une canne de graphite.

Tableau 6. Réactions mises en jeu dans la combinaison Cl₂(g)/CO(g)/C(s)/ion Cl⁻ et relations associées

| Réaction redox | Relation de Nernst | E°(V)/Cl₂/Cl⁻ | |
|---|---|---|---|
| Cl₂(g) + 2e → 2Cl⁻ | $$E_{Cl2} = E°_{Cl2} + \frac{2.3RT}{2F}\log\frac{P(Cl_2)}{a(Cl^-)^2}$$ | 0 | (21) |

(suite)

| Réaction redox | Relation de Nernst | E°(V)/Cl₂/Cl⁻ | |
|---|---|---|---|
| CO(g) + 2NaCl+ 2e → C + Na$_2$O + 2Cl⁻ | $E_{CO/C} = E^{\circ}_{CO/C} + \dfrac{2.3RT}{2F}\log\dfrac{P(CO)a(NaCl)^2}{a(Na_2O)a(C)a(Cl^-)^2}$ | -2.896 | (22) |
| De (21) et (22) | $pa(Na_2O) = \dfrac{2F}{2.3RT}\left(E_{Cl2} - E^{\circ}_{CO/C}\right) - 2\log a(NaCl) - \log P(CO)$ | | (23) |

Dans ce cas, le potentiel est fixé par la pression partielle de Cl$_2$ et l'oxo-acidité par la relation (23) établie par la combinaison des relations (21) et (22). L'activité du carbone (a(C)) est fixée égale à 1 dans les calculs.

iii) Combinaison Cl$_2$(g)/CO$_2$(g)/CO(g)/ion Cl⁻

En introduisant CO$_2$ et CO dans la même combinaison, on peut ne pas mettre le carbone C. Le couple redox Cl$_2$/Cl⁻ fixe le potentiel comme dans le cas précédent et le couple CO2/CO qui est à la fois redox et oxo-acide fixe l'oxo-acidité.

Les réactions et relations utilisées pour étudier cette combinaison sont présentées Tableau 7.

Tableau 7. Réactions mises en jeu dans le mélange Cl$_2$(g)/CO$_2$(g)/CO(g)/ion Cl⁻ et relations associées

| Réaction redox | Relation de Nernst | E°(V)/Cl₂/Cl⁻ | |
|---|---|---|---|
| Cl$_2$(g) + 2e → 2Cl⁻ | $E_{Cl2} = E^{\circ}_{Cl2} + \dfrac{2.3RT}{2F}\log\dfrac{P(Cl_2)}{a(Cl^-)^2}$ | 0 | (24) |
| CO$_2$(g) + 2NaCl+ 2e →CO(g) + Na$_2$O + 2Cl⁻ | $E_{CO2/CO} = E^{\circ}_{CO2/CO} + \dfrac{2.3RT}{2F}\log\dfrac{P(CO_2)a(NaCl)^2}{a(Na_2O)P(CO)a(Cl^-)^2}$ | -2.896 | (25) |
| De (24) et (25): | $pa(Na_2O) = \dfrac{2F}{2.3RT}\left(E_{Cl2} - E^{\circ}_{CO2/CO}\right) - 2\log a(NaCl) - \log P(CO_2) + \log P(CO)$ | | (26) |

iv) Mélange CCl$_4$(g)/CO$_2$(g)/C(s)

Le couple acido-basique est fixé par les pressions partielles des gaz CCl$_4$ et CO$_2$ et les couples redox associés sont CCl$_4$/C et CO$_2$/C. Les réactions et relations considérées sont données Tableau 8.

Tableau 8. Réactions mises en jeu dans le mélange CCl$_4$(g)/CO$_2$(g)/C(s)

| Réaction redox | Relation de Nernst | E°(V)/Cl₂/Cl⁻ | |
|---|---|---|---|
| CCl$_4$(g) + 4e → C + 4Cl⁻ | $E_{CCl4/C} = E^{\circ}_{CCl4/C} + \dfrac{2.3RT}{4F}\log\dfrac{P(CCl_4)}{a(C)a(Cl^-)^4}$ | 0.100 | (27) |
| CO$_2$(g) + 4NaCl+ 4e → C + 2Na$_2$O + 4Cl⁻ | $E_{CO2/C} = E^{\circ}_{CO2/C} + \dfrac{2.3RT}{4F}\log\dfrac{P(CO_2)a(NaCl)^4}{a(Na_2O)^2 a(C)a(Cl^-)^4}$ | -2.896 | (28) |
| Equilibre acido-basique | Constante d'équilibre | log K | |
| CCl$_4$(g) + 2Na$_2$O → CO$_2$(g) + 4NaCl | $K_{CCl4/CO2} = \dfrac{P(CO_2)a(NaCl)^4}{P(CCl_4)a(Na_2O)^2}$ | 62.093 | (29) |

v) Mélange gazeux $CCl_4/CO_2/CO$

Le carbone est remplacé par CO gazeux. Les couples redox sont $CCl_4/CO$ et $CO_2/CO$. Les réactions et relations considérées sont données Tableau 9.

Tableau 9. Réactions mises en jeu dans le mélange gazeux $CCl_4/CO_2/CO$

| Réaction redox | Relation de Nernst | E°(V)/Cl₂/Cl⁻ | |
|---|---|---|---|
| $CCl_4(g) + Na_2O + 2e \rightarrow CO(g) + 2NaCl + 2Cl^-$ | $E_{CCl4/CO} = E°_{CCl4/CO} + \dfrac{2.3RT}{2F}\log\dfrac{P(CCl_4)a(Na_2O)}{P(CO)a(NaCl)^2 a(Cl^-)^2}$ | 3,097 | (30) |
| $CO_2(g) + 2NaCl + 2e \rightarrow CO(g) + Na_2O + 2Cl^-$ | $E_{CO2/CO} = E°_{CO2/CO} + \dfrac{2.3RT}{2F}\log\dfrac{P(CO_2)a(NaCl)^2}{a(Na_2O)P(CO)a(Cl^-)^2}$ | -2.896 | (31) |
| Equilibre acido-basique | Constante d'équilibre | log K | |
| $CCl_4(g) + 2Na_2O \rightarrow CO_2(g) + 4NaCl$ | $K_{CCl4/CO2} = \dfrac{P(CO_2)a(NaCl)^4}{P(CCl_4)a(Na_2O)^2}$ | 62.093 | (32) |

vi) Mélange gazeux $COCl_2/CO_2/C$

Dans ce mélange gazeux, l'oxo-acidité est fixée par le couple $COCl_2/CO_2$ et le potentiel redox par les couples $COCl_2/C$ et $CO_2/C$. Les réactions et relations utilisées sont rassemblées dans Tableau 10.

Tableau 10. Réactions mises en jeu dans le mélange gazeux $COCl_2/CO_2/C$

| Réactions redox | Relation de Nernst | E°(V) /Cl₂/Cl⁻ | |
|---|---|---|---|
| $COCl_2(g) + 2NaCl + 4e \rightarrow C + Na_2O + 4Cl^-$ | $E_{COCl2/C} = E°_{COCl2/C} + \dfrac{2.3RT}{4F}\log\dfrac{P(COCl_2)a(NaCl)^2}{a(C)a(Na_2O)a(Cl^-)^4}$ | -1.387 | (33) |
| $CO_2(g) + 4NaCl + 4e \rightarrow C + 2Na_2O + 4Cl^-$ | $E_{CO2/C} = E°_{CO2/C} + \dfrac{2.3RT}{4F}\log\dfrac{P(CO_2)a(NaCl)^4}{a(C)a(Na_2O)^2 a(Cl^-)^4}$ | -2.896 | (34) |
| Equilibre acido-basique | Constante d'équilibre | log K | |
| $COCl_2(g) + Na_2O \rightarrow CO_2(g) + 2NaCl$ | $K_{COCl2/CO2} = \dfrac{P(CO_2)a(NaCl)^2}{P(COCl_2)a(Na_2O)}$ | 31,258 | (35) |

vii) Mélange gazeux $COCl_2/CO_2/CO$

Dans ce mélange gazeux, l'oxo-acidité est toujours fixée par le couple $COCl_2/CO_2$ et le potentiel redox par les couples $COCl_2/CO$ et $CO_2/CO$. Les réactions et relations utilisées sont rassemblées dans Tableau 11.

Tableau 11. Réactions mises en jeu dans le mélange gazeux $COCl_2/CO_2/CO$

| Réactions redox | Relation de Nernst | E°(V) /Cl₂/Cl⁻ | |
|---|---|---|---|
| $COCl_2(g) + 2e \rightarrow CO(g) + 2Cl^-$ | $E_{COCl2/CO} = E°_{COCl2/CO} + \dfrac{2.3RT}{2F}\log\dfrac{P(COCl_2)}{P(CO)a(Cl^-)^2}$ | 0.121 | (36) |
| $CO_2(g) + 2NaCl + 2e \rightarrow CO(g) + Na_2O + 2Cl^-$ | $E_{CO2/CO} = E°_{CO2/CO} + \dfrac{2.3RT}{2F}\log\dfrac{P(CO_2)a(NaCl)^2}{P(CO)a(Na_2O)a(Cl^-)^2}$ | -2.896 | (37) |

(suite)

| Réactions redox | Relation de Nernst | E°(V) /Cl$_2$/Cl$^-$ | |
|---|---|---|---|
| Equilibre acido-basique | Constante d'équilibre | log K | |
| $COCl_2(g) + Na_2O \rightarrow CO_2(g) + 2NaCl$ | $K_{COCl2/CO2} = \dfrac{P(CO_2)a(NaCl)^2}{P(COCl_2)a(Na_2O)}$ | 31,258 | (38) |

viii) Mélange gazeux $CCl_4/CO_2/HCl/H_2$

Le mélange gazeux $CCl_4/CO_2/HCl/H_2$ constitue également un mélange de gaz constitué d'un couple acido-basique fortement oxo-acide et un couple redox ayant un fort pouvoir réducteur. Les réactions et relations utilisées sont rassemblées dans le Tableau 12.

Tableau 12. Réactions mises en jeu dans le mélange gazeux $CCl_4/CO_2/HCl/H_2$

| Réactions redox | Relation de Nernst | E°(V) /Cl$_2$/Cl$^-$ | |
|---|---|---|---|
| $2HCl(g) + 2e \rightarrow H_2(g) + 2Cl^-$ | $E_{HCl/H2} = E°_{HCl/H2} + \dfrac{2.3RT}{2F}\log\dfrac{P(HCl)^2}{P(H_2)a(Cl^-)^2}$ | -1.043 | (39) |
| Equilibre acido-basique | Constante d'équilibre | log K | |
| $CCl_4(g) + 2Na_2O \rightarrow CO_2(g) + 4NaCl$ | $K_{CCl4/CO2} = \dfrac{P(CO_2)a(NaCl)^4}{P(CCl_4)a(Na_2O)^2}$ | 62.093 | (40) |

III.6. *Conclusion*

Le Tableau 13 rassemble les différents mélanges considérés par les inventeurs et rappelle les domaines de potentiel et d'oxo-acidité que ces mélanges peuvent atteindre en fonction de leur composition (comprise entre $10^{-6}$ et 0.5 atm).

Tableau 13. Domaines de potentiel et d'oxo-acidité pris par différents mélanges pour des pressions partielles comprises entre $10^{-6}$ et 0.5 atm

| Mélange | E$_{min}$ (V)/Cl$_2$ | E$_{max}$ (V) /Cl$_2$ | pa(Na$_2$O) min | pa(Na$_2$O) max |
|---|---|---|---|---|
| HCl-H$_2$O-H$_2$ | -2.17 | -0.52 | 7.7 | 24.8 |
| Cl$_2$-O$_2$-ion Cl$^-$ | -0.58 | -0.03 | 13.9 | 22.5 |
| Cl$_2$-CO-C-ion Cl$^-$ | -0.58 | -0.03 | 24.7 | 36.1 |
| Cl$_2$-CO$_2$-C-ion Cl$^-$ | -0.58 | -0.03 | 24.6 | 33.1 |
| Cl$_2$-CO$_2$-CO-ion Cl$^-$ | -0.58 | -0.03 | 18.7 | 35.8 |
| CCl$_4$-CO$_2$-C | -0.19 | 0.085 | 28.6 | 34.3 |
| CCl$_4$-CO$_2$-CO | -0.45 | 0.65 | 28.6 | 34.3 |
| SOCl$_2$-SO$_2$-S$_2$Cl$_2$ | -0.72 | 0.56 | 21.7 | 33 |
| COCl$_2$-CO$_2$-C | -0.44 | 0.38 | 25.9 | 37.3 |
| COCl$_2$-CO$_2$-CO | -0.44 | 0.67 | 25.9 | 37.3 |
| CCl$_4$-CO$_2$-HCl-H$_2$ | -2.17 | -0.52 | 28.6 | 34.3 |
| CCl$_4$-CO-HCl-H$_2$ | -2.17 | -0.52 | 32.3 | 60.7 |

Les potentiels les plus bas sont obtenus avec des mélanges contenant H$_2$ et les potentiels les plus oxydants avec

les mélanges contenant $CCl_4(g)$ ou $COCl_2(g)$. Les oxo-acidités les plus grandes sont obtenues avec les mélanges contenant $CO(g)$ et $CO_2(g)$. Le gaz le plus réducteur considéré ici est donc $H_2$ et le plus oxo-acide est $CO(g)$.

Ces différents mélanges peuvent aussi être classés en fonction des 5 applications potentielles suivantes :

- Synthèse de $PuCl_3$ (à partie de $PuO_2$)
- Synthèse de $UCl_3$ (à partir de $UO_2$ ou $U_3O_8$)
- Contrôle du redox du sel combustible en fonctionnement
- Précipitation des oxydes d'uranium et de plutonium
- Chloration du sel combustible, séparation U/Pu ($UCl_5(g)$, $PuCl_3$ dans le sel)

Le Tableau 14 présente une synthèse de l'utilisation des mélanges en fonction de ces applications potentielles.

Tableau 14. Utilisation des mélanges selon l'application potentielle

| | HCl $H_2O$ $H_2$ | $Cl_2$ $O_2$ $Cl^-$ | $Cl_2$ CO C $Cl^-$ | $Cl_2$ $CO_2$ C $Cl^-$ | $Cl_2$ $CO_2$ CO $Cl^-$ | $CCl_4$ $CO_2$ C | $CCl_4$ $CO_2$ CO | $SOCl_2$ $SO_2$ $S_2Cl_2$ | $COCl_2$ $CO_2$ C | $COCl_2$ $CO_2$ CO | $CCl_4$ $CO_2$ HCl $H_2$ | $CCl_4$ CO HCl $H_2$ |
|---|---|---|---|---|---|---|---|---|---|---|---|---|
| Synthèse de $UCl_3$ | | | | | | | | | | | X | X |
| Synthèse de $PuCl_3$ | | | x | x | x | X | X | x | X | X | X | XX |
| Contrôle du redox du sel combustible | | | | | | | | | | | x | x |
| Précipitation des oxydes U et Pu | x | x | | | | | | | | | | |
| Chloration du sel combustible, séparation U/Pu | | | X | X | x | X | X | X | X | x | | |

**Revendications**

1. Procédé pour obtenir un bain de sels fondus chlorures comprenant au moins un actinide dans lequel l'état et/ou le degré d'oxydation dudit au moins un actinide sont prédéterminés, comprenant les étapes suivantes :

   a) établir, pour ledit au moins un actinide, son diagramme potentiel-oxoacidité à une température T donnée dans un bain de sels fondus chlorures,
   b) à partir du diagramme potentiel-oxoacidité établi à l'étape a), définir le domaine de potentiel-oxoacidité dans lequel ledit au moins un actinide se trouve dans l'état et/ou le degré d'oxydation prédéterminés,
   c) sélectionner au moins trois composés différents permettant de fixer, à la température T, le potentiel et l'oxoacidité du bain de sels fondus chlorures dans le domaine défini à l'étape b), un desdits au moins trois composés pouvant être l'ion chlorure contenu dans le bain de sels fondus chlorures, puis
   d) introduire dans un bain de sels fondus chlorures comprenant ledit au moins un actinide à la température T lesdits au moins trois composés sélectionnés à l'étape c).

2. Procédé d'obtention selon la revendication 1, **caractérisé en ce que** ledit bain de sels fondus chlorures comprend au moins deux actinides différents dont l'état et/ou le degré d'oxydation desdits au moins deux actinides sont prédéterminés et le procédé comprend les étapes suivantes :

   a) établir, pour chacun desdits au moins deux actinides, son diagramme potentiel-oxoacidité à une température T donnée dans un bain de sels fondus chlorures,
   b) à partir des diagrammes potentiel-oxoacidité établis à l'étape (a), définir le domaine de potentiel-oxoacidité dans lequel lesdits au moins deux actinides se trouvent dans l'état et/ou le degré d'oxydation prédéterminés,

c) sélectionner au moins trois composés différents permettant de fixer, à la température T, le potentiel et l'oxoacidité du bain de sels fondus chlorures dans le domaine défini à l'étape b), un desdits au moins trois composés pouvant être l'ion chlorure contenu dans le bain de sels fondus chlorures, puis

d) mettre en contact, un bain de sels fondus chlorures comprenant lesdits au moins au moins deux actinides à la température T et lesdits au moins trois composés sélectionnés à l'étape c).

3. Procédé d'obtention selon la revendication 1 ou 2, **caractérisé en ce que** ladite température T est comprise entre 450°C et 1000°C.

4. Procédé d'obtention selon l'une quelconque des revendications 1 à 3, **caractérisé en ce que** ledit bain de sels fondus chlorures comprend au moins un sel choisi dans le groupe constitué par le chlorure de sodium (NaCl), le dichlorure de magnésium (MgCl$_2$), le chlorure de potassium (KCl), le chlorure de lithium (LiCl), le dichlorure de calcium (CaCl$_2$) et un de leurs mélanges.

5. Procédé d'obtention selon l'une quelconque des revendications 1 à 4, **caractérisé en ce que** ledit bain de sels fondus chlorures comprend au moins du chlorure de sodium (NaCl).

6. Procédé d'obtention selon la revendication 5, **caractérisé en ce que**, dans le ou les diagramme(s) établi(s) à l'étape a), l'axe des potentiels est référencé par rapport au couple redox Cl$_2$(1 atm)/Cl$^-$ (a=1) et l'axe de l'oxo-acidité est exprimée par le cologarithme pa(Na$_2$O) (= - log a(Na$_2$O)).

7. Procédé d'obtention selon l'une quelconque des revendications 1 à 6, **caractérisé en ce que** ledit au moins un actinide ou lesdits au moins deux actinides est/sont choisi(s) dans le groupe constitué par le thorium (Th), l'uranium (U), le plutonium (Pu), le neptunium (Np), l'américium (Am) et le curium (Cm).

8. Procédé d'obtention selon l'une quelconque des revendications 1 à 7, **caractérisé en ce que** ledit au moins un actinide ou lesdits au moins deux actinides comprend/comprennent de l'uranium (U) et/ou du plutonium (Pu).

9. Procédé d'obtention selon l'une quelconque des revendications 1 à 8, **caractérisé en ce que** lesdits au moins trois composés différents sont choisis parmi des composés gazeux, l'ion chlorure du bain de sels fondus chlorures et du carbone.

10. Procédé d'obtention selon l'une quelconque des revendications 1 à 9, **caractérisé en ce que** lesdits au moins trois composés différents comprennent deux composés formant un couple redox, deux composés formant un couple acido-basique et au moins un gaz chloré.

11. Procédé d'obtention selon l'une quelconque des revendications 1 à 10, **caractérisé en ce que**, lors de l'étape c), la sélection desdits au moins trois composés différents se fait par calcul sur la base des réactions redox et acido-basique mises en jeu entre lesdits au moins trois composés différents et des relations associées du type relation de Nernst et constante d'équilibre.

12. Procédé d'obtention selon l'une quelconque des revendications 1 à 11, **caractérisé en ce que** lesdits au moins trois composés différents sont choisis dans le groupe constitué par l'eau (H$_2$O), le dihydrogène (H$_2$), l'acide chlorhydrique (HCl), le dichlore (Cl$_2$), l'ion chlorure (Cl$^-$), le carbone (C), l'oxyde de carbone (CO), le dioxyde de carbone (CO$_2$), le tétrachlorure de carbone (ou térachlorométhane, CCl$_4$), le dichlorure de carbonyle (ou phosgène, COCl$_2$), le chlorure de thionyle (SOCl$_2$), le dichlorure de disoufre (S$_2$Cl$_2$) et le dioxyde de soufre (SOCl$_2$).

13. Procédé d'obtention selon l'une quelconque des revendications 1 à 12, **caractérisé en ce que** lesdits au moins trois composés différents sont choisis dans le groupe constitué par le mélange HCl/H$_2$O/H$_2$, la combinaison Cl$_2$/O$_2$/ion Cl$^-$, la combinaison Cl$_2$/CO/C/ion Cl$^-$, la combinaison Cl$_2$/CO$_2$/C/ion Cl$^-$, la combinaison Cl$_2$/CO$_2$/CO/ion Cl$^-$, le mélange CCl$_4$/CO$_2$/C, le mélange CCl$_4$/CO$_2$/CO, le mélange SOCl$_2$/SO$_2$/S$_2$Cl$_2$, le mélange COCl$_2$/CO$_2$/C, le mélange COCl$_2$/CO$_2$/CO, le mélange CCl$_4$/CO$_2$/HCl/H$_2$ et le mélange CCl$_4$/CO/HCl/H$_2$.

14. Utilisation du mélange CCl$_4$/CO$_2$/HCl/H$_2$ ou du mélange CCl$_4$/CO/HCl/H$_2$

- pour synthétiser du trichlorure d'uranium (UCl$_3$) dans un bain de sels fondus chlorures, notamment à base de NaCl, et contenant au moins de l'uranium ou

- pour contrôler le redox du sel combustible dans un tel bain.

15. Utilisation de la combinaison $Cl_2/CO/C/Cl^-$, de la combinaison $Cl_2/CO_2/C/Cl^-$, de la combinaison $Cl_2/CO_2/CO/Cl^-$, du mélange $CCl_4/CO_2/C$, du mélange $CCl_4/CO_2/CO$, du mélange $SOCl_2/SO_2/S_2Cl_2$, du mélange $COCl_2/CO_2/C$, du mélange $COCl_2/CO_2/CO$, du mélange $CCl_4/CO_2/HCl/H_2$ ou du mélange $CCl_4/CO/HCl/H_2$ pour synthétiser du trichlorure de plutonium ($PuCl_3$) dans un bain de sels fondus chlorures, notamment à base de NaCl, et contenant au moins du plutonium.

16. Utilisation du mélange $HCl/H_2O/H_2$ ou de la combinaison $Cl_2/O_2/Cl^-$ pour précipiter des oxydes d'uranium et de plutonium dans un bain de sels fondus chlorures, notamment à base de NaCl contenant au moins de l'uranium et au moins du plutonium.

17. Utilisation de la combinaison $Cl_2/CO/C/Cl^-$, de la combinaison $Cl_2/CO_2/C/Cl^-$, de la combinaison $Cl_2/CO_2/CO/Cl^-$, du mélange $CCl_4/CO_2/C$, du mélange $CCl_4/CO_2/CO$, du mélange $SOCl_2/SO_2/S_2Cl_2$, du mélange $COCl_2/CO_2/C$ ou du mélange $COCl_2/CO_2/CO$ pour la chloration du sel combustible et la séparation de l'uranium et du plutonium dans un bain de sels fondus chlorures, notamment à base de NaCl contenant au moins de l'uranium et au moins du plutonium.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Europäisches
Patentamt

European
Patent Office

Office européen
des brevets

**RAPPORT DE RECHERCHE EUROPEENNE**

Numéro de la demande

**EP 24 30 6496**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | BROWN L D ET AL: "Predominance diagrams of uranium and plutonum species in both lithium chloride-potassium chloride eutectic and calcium chloride", JOURNAL OF APPLIED ELECTROCHEMISTRY, SPRINGER, DORDRECHT, NL, vol. 43, no. 12, 28 août 2013 (2013-08-28) , pages 1235-1241, XP035305755, ISSN: 0021-891X, DOI: 10.1007/S10800-013-0611-9 [extrait le 2013-08-28] | 1-8 | INV. G21C3/54 G21C19/48 G21C19/50 G21F9/06 |
| Y | * le document en entier * | 9,12,13 | |
| Y | VIGIER JEAN-FRANÇOIS ET AL: "Uranium (III)-Plutonium (III) co-precipitation in molten chloride", JOURNAL OF NUCLEAR MATERIALS, vol. 499, 1 février 2018 (2018-02-01), pages 394-400, XP093250095, NETHERLANDS ISSN: 0022-3115, DOI: 10.1016/j.jnucmat.2017.11.028 sec. 1 et 2; * abrégé * | 9,12,13 | |
| Y | GB 2 536 857 A (IAN RICHARD SCOTT [GB]) 5 octobre 2016 (2016-10-05) * page 1 - page 2; revendication 1 * | 9,12,13 | DOMAINES TECHNIQUES RECHERCHES (IPC) G21C C01G C01D G21F |
| Y | US 2020/211724 A1 (CISNEROS JR ANSELMO T [US] ET AL) 2 juillet 2020 (2020-07-02) * alinéa [0133] - alinéa [0149]; figures 9,10 * | 9,12,13 | |

Le présent rapport a été établi pour toutes les revendications

| Lieu de la recherche | Date d'achèvement de la recherche | Examinateur |
|---|---|---|
| Munich | 16 avril 2025 | Grivas, Symeon |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

2

Europäisches
Patentamt

European
Patent Office

Office européen
des brevets

## REVENDICATIONS DONNANT LIEU AU PAIEMENT DE TAXES

La présente demande de brevet européen comportait lors de son dépôt les revendications dont le paiement était dû.

☐ Une partie seulement des taxes de revendication ayant été acquittée dans les délais prescrits, le présent rapport de recherche européenne a été établi pour les revendications pour lesquelles aucun paiement n'était dû ainsi que pour celles dont les taxes de revendication ont été acquittées, à savoir les revendication(s):

☐ Aucune taxe de revendication n'ayant été acquittée dans les délais prescrits, le présent rapport de recherche européenne a été établi pour les revendications pour lesquelles aucun paiement n'était dû.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☐ Toutes les nouvelles taxes de recherche ayant été acquittées dans les délais impartis, le présent rapport de recherche européenne a été établi pour toutes les revendications.

☐ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☒ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

1-9, 12, 13

☐ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

☐ Le present rapport supplémentaire de recherche européenne a été établi pour les parties de la demande de brevet européen qui se rapportent a l'invention mentionée en premier lieu dans le revendications (Règle 164 (1) CBE)

Europäisches
Patentamt

European
Patent Office

Office européen
des brevets

**ABSENCE D'UNITÉ D'INVENTION**
**FEUILLE SUPPLÉMENTAIRE B**

La division de la recherche estime que la présente demande de brevet européen ne satisfait pas à l'exigence relative à l'unité d'invention et concerne plusieurs inventions ou pluralités d'inventions, à savoir :

**1. revendications: 1-8**

Procédé selon l'objet commun, dans lequel ...

**1.1. revendications: 1, 2**

... l'état et/ou le degré d'oxydation dudit au moins un actinide sont prédéterminés; en outre comprenant les étapes suivantes :
a) établir, pour ledit au moins un actinide, son diagramme potentiel-oxoacidité à une température T donnée dans un bain de sels fondus chlorures,
b) à partir du diagramme potentiel-oxoacidité établi à l'étape a), définir le domaine de potentiel-oxoacidité dans lequel ledit au moins un actinide se trouve dans l'état et/ou le degré d'oxydation prédéterminés,
c) sélectionner ledits au moins trois composés différents permettant de fixer, à la température T, le potentiel et l'oxoacidité du bain de sels fondus chlorures dans le domaine défini à l'étape b), puis
d) introduire dans un bain de sels fondus chlorures comprenant ledit au moins un actinide à la température T lesdits au moins trois composés sélectionnés à l'étape c); qui sont considérées comme résolvant le problème de contrôler l'état et le degré d'oxydation des actinides contenus dans un bain de sels fondus chlorures.

**1.2. revendication: 3**

... ladite température T est comprise entre 450°C et 1000°C; qui est considérée comme résolvant le problème de maintenir le sel fondu à l'état fondu.

**1.3. revendications: 4-6**

... ledit bain de sels fondus chlorures comprend au moins un sel choisi dans le groupe constitué par le chlorure de sodium (NaCl), le dichlorure de magnésium (MgCl 2), le chlorure de potassium (KCl), le chlorure de lithium (LiCI), le dichlorure de calcium (CaCl2) et un de leurs mélanges; qui est considéré comme résolvant le problème de fournir un bain de sels fondus chlorures.

**1.4. revendications: 7, 8**

... ledit au moins un actinide ou lesdits au moins deux actinides est/sont choisi(s) dans le groupe constitué par le thorium (Th), l'uranium (U), le plutonium (Pu), le neptunium (Np), l'américium (Am) et le curium (Cm); qui est considéré comme résolvant le problème de fournir un actinide pertinent pour un réacteur à sels fondus.

EPO FORM P0402

page 1 de 4

Europäisches
Patentamt

European
Patent Office

Office européen
des brevets

**ABSENCE D'UNITÉ D'INVENTION
FEUILLE SUPPLÉMENTAIRE B**

Numéro de la demande

EP 24 30 6496

La division de la recherche estime que la présente demande de brevet européen ne satisfait pas à l'exigence relative à l'unité d'invention et concerne plusieurs inventions ou pluralités d'inventions, à savoir :

---

2. revendications: 9, 12, 13

Procédé selon l'objet commun; dans lequel:
lesdits au moins trois composés différents sont choisis parmi des composés gazeux, l'ion chlorure du bain de sels fondus chlorures et du carbone;
qui sont considérés comme résolvant le problème de de choisir des réactifs pour l'obtention du bain de sels fondus chlorures.

---

3. revendication: 10

Procédé selon l'objet commun; dans lequel:
lesdits au moins trois composés différents comprennent deux composés formant un couple redox, deux composés formant un couple acido-basique et au moins un gaz chloré;
qui sont considérés comme résolvant le problème de limiter les espèces d'actinides prédominantes à une zone spécifique du diagramme potentiel-oxoacidité.

---

4. revendication: 11

Procédé selon l'objet commun; dans lequel:
lors de l'étape c), la sélection desdits au moins trois composés différents se fait par calcul sur la base des réactions redox et acido-basique mises en jeu entre lesdits au moins trois composés différents et des relations associées du type relation de Nernst et constante d'équilibre;
qui est considérée comme résolvant le problème de sélectionner le domaine dans lequel les différents actinides considérés se trouvent dans l'état et/ou le degré d'oxydation souhaité.

---

5. revendication: 14(en partie)

Procédé selon l'objet commun; comprenant:
la synthèse du trichlorure d'uranium (UCl 3) dans le bain de sels fondus chlorures,
lesdits au moins trois composés différents étant choisis dans le groupe constitué par
le mélange CCl 4 /CO2 /HCl/H2 ou le mélange CCl4 /CO/HCl/H2 ;
qui sont considérées comme résolvant le problème de la synthèse du trichlorure d'uranium dans le bain de sels fondus chlorures.

EPO FORM P0402

page 2 de 4

Europäisches
Patentamt

European
Patent Office

Office européen
des brevets

**ABSENCE D'UNITÉ D'INVENTION**
**FEUILLE SUPPLÉMENTAIRE B**

Numéro de la demande

**EP 24 30 6496**

La division de la recherche estime que la présente demande de brevet européen ne satisfait pas à l'exigence relative à l'unité d'invention et concerne plusieurs inventions ou pluralités d'inventions, à savoir :

---

6. revendication: 14(en partie)

Procédé selon l'objet commun; dans lequel,
le contrôle du redox du sel combustible dans le bain de sels
fondus chlorures,
lesdits au moins trois composés différents étant choisis
dans le groupe constitué par
le mélange CCl 4 /CO2 /HCl/H2 ou le mélange CCl4 /CO/HCl/H2
;
qui sont considérées comme  résolvant le problème du
contrôle du redox du sel combustible dans le bain de sels
fondus chlorures.

---

7. revendication: 15

Procédé selon l'objet commun; comprenant:
la synthèse du trichlorure de plutonium (PuCl 3) dans le
bain de sels fondus chlorures,
lesdits au moins trois composés différents étant choisis
dans le groupe constitué par la combinaison Cl 2/CO/C/Cl- ,
la combinaison Cl2/CO2/C/Cl- , la combinaison Cl2/CO2/CO/Cl-
, le mélange CCl4/CO2/C, le mélange CCl4/CO2/CO, le mélange
SOCl2/SO2/S2Cl2, le mélange COCl2/CO2/C, le mélange
COCl2/CO2/CO, le mélange CCl4/CO2/HCl/H2 ou le mélange
CCl4/CO/HCl/H2 ;
qui sont considérées comme  résolvant le problème de la
synthèse du trichlorure de plutonium dans le bain de sels
fondus chlorures.

---

8. revendication: 16

Procédé selon l'objet commun; comprenant:
la précipitation des oxydes d'uranium et de plutonium dans
le bain de sels fondus chlorures,
lesdits au moins trois composés différents étant choisis
dans le groupe constitué par le mélange HCl/H 2O/H2 ou la
combinaison Cl2/O2/Cl- ;
qui sont considérées comme  résolvant le problème de la
précipitation des oxydes d'uranium et de plutonium dans le
bain de sels fondus chlorures.

---

9. revendication: 17

Procédé selon l'objet commun; comprenant:
la chloration du sel combustible et
la séparation de l'uranium et du plutonium dans le bain de

EPO FORM P0402

Europäisches
Patentamt

European
Patent Office

Office européen
des brevets

**ABSENCE D'UNITÉ D'INVENTION
FEUILLE SUPPLÉMENTAIRE B**

Numéro de la demande

EP 24 30 6496

La division de la recherche estime que la présente demande de brevet européen ne satisfait pas à l'exigence relative à l'unité d'invention et concerne plusieurs inventions ou pluralités d'inventions, à savoir :

> sels fondus chlorures,
> lesdits au moins trois composés différents étant choisis dans le groupe constitué par la combinaison Cl 2/CO/C/CI- , la combinaison Cl2/CO2/C/Cl- , la combinaison Cl2/CO2/CO/Cl- , le mélange CCl4/CO2/C, le mélange CCl4/CO2/CO, le mélange SOCl2/SO2/S2Cl2, le mélange COCl2/CO2/C ou le mélange COCl2/CO2/CO;
> qui sont considérées comme résolvant le problème de la chloration du sel combustible et la séparation de l'uranium et du plutonium dans le bain de sels fondus chlorures.
> ---

Prière de noter que toutes les inventions mentionnées sous point 1, qui ne sont pas nécessairement liées par un concept inventif commun, ont pu être recherchées sans effort particulier justifiant une taxe additionnelle.

EPO FORM P0402

page 4 de 4

## ANNEXE AU RAPPORT DE RECHERCHE EUROPEENNE
## RELATIF A LA DEMANDE DE BREVET EUROPEEN NO.

EP 24 30 6496

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-04-2025

| Document brevet cité au rapport de recherche | | Date de publication | Membre(s) de la famille de brevet(s) | | Date de publication |
|---|---|---|---|---|---|
| GB 2536857 | A | 05-10-2016 | AUCUN | | |
| US 2020211724 | A1 | 02-07-2020 | US | 2020211724 A1 | 02-07-2020 |
| | | | US | 2022139577 A1 | 05-05-2022 |

EPO FORM P0460

Pour tout renseignement concernant cette annexe : voir Journal Officiel de l'Office européen des brevets, No.12/82